(19) Europäisches Patentamt
European Patent Office
Office européen des brevets

(11) Publication number: 0 128 414 A2

(12) EUROPEAN PATENT APPLICATION

(21) Application number: 84105838.1

(22) Date of filing: 22.05.84

(51) Int. Cl.³: E 03 D 9/02
// C09B19/00, C09B21/00

(30) Priority: 06.06.83 US 501466
10.11.83 US 550662

(43) Date of publication of application: 19.12.84
Bulletin 84/51

(84) Designated Contracting States: DE FR GB

(71) Applicant: THE HILTON - DAVIS CHEMICAL COMPANY,
2235 Langdon Farm Road, Cincinnati Ohio (US)

(72) Inventor: Hung, William Mo-Wei, 9176 Millcliff Drive,
Cincinnati Ohio (US)
Inventor: Knox, Jack Michael, 722 Hillview Drive,
Cincinnati Ohio (US)

(74) Representative: Baillie, Iain Cameron et al, c/o Ladas & Parry Isartorplatz 5, D-8000 München 2 (DE)

(54) **Method of sanitizing toilets.**

(57) A method for sanitizing flush toilets wherein a sanitizing agent and a phenothiazine or phenoxazine dyestuff are dispensed into the toilet flush water. The dyestuff is resistant to attack by the sanitizing agent and therefore provides an aesthetically pleasing color to the water remaining in the bowl during the time period between flushes.

EP 0 128 414 A2

The present invention relates to the automatic sanitizing of flush toilets by means of dispensing certain water-soluble phenothiazine or phenoxazine dyestuffs and a sanitizing agent into the toilet bowl with each flush. The dyestuff is resistant to attack by the sanitizing agent and thus, provides color to the bowl water during the time period that the water remains in the bowl between flushes.

Automatically dispensed toilet bowl cleaning and/or sanitizing systems which contain colorants to provide a visual signal to the user that the sanitizing product is being dispensed are well known. There are two general types of these sanitizing systems available. One of these systems has a visual signal which is transitory, that is, the sanitizing solution in the toilet bowl retains its colored appearance for only a brief amount of time. The other system, and one in which this invention finds its utility, is the system wherein the sanitizing solution in the toilet bowl is intended to show persistent color until the next flush.

U.S. Patent 3,504,384, which issued April 7, 1970, discloses that the dyestuff known as Disulfide Blue VN150 can be incorporated into surfactant components contained within a dual compartment dispenser for automatically dispensing a hypochlorite solution and a surfactant solution into the toilet bowl during flushing. This dye, which is believed to be Disulphine Blue VN150 (Color Index 42045) having the formula

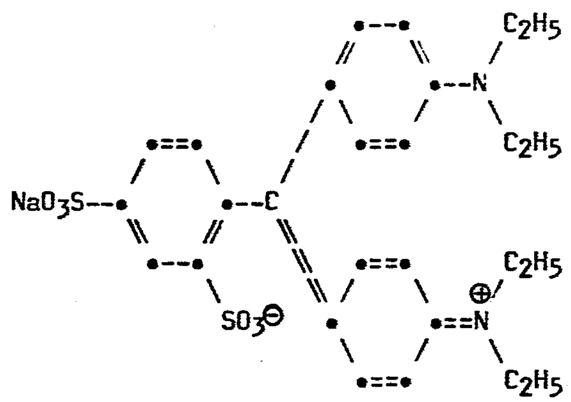

,

has been found to be resistant to oxidation to a colorless state by hypochlorite. But, solutions of this dye have a tendency to change from a blue shade to a reddish-purple shade upon prolonged contact with hypochlorite.

U.S. Patent 4,200,606, which issued April 29, 1980, discloses a method of treating a flush toilet, from a dual compartment dispenser for automatically dispensing, with a hypochlorite sanitizing solution and a surfactant solution each time the toilet is flushed. A persistent color is purportedly maintained in the bowl water by incorporating either FD&C Blue No. 1 having the formula

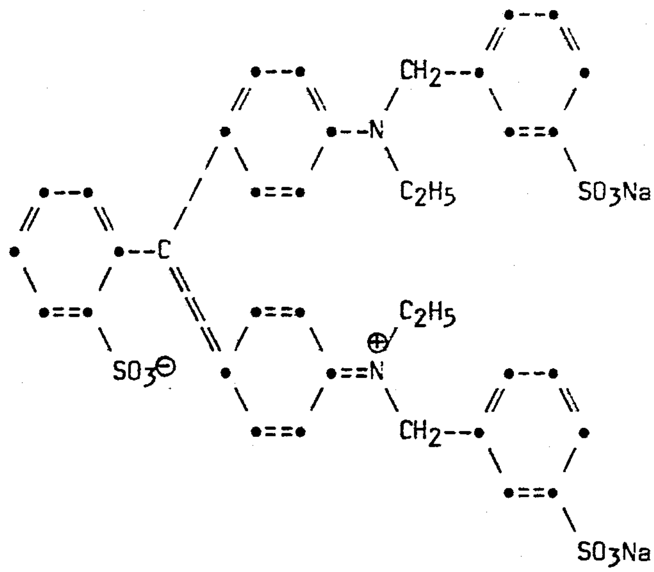

or FD&C Green No. 3 having the formula

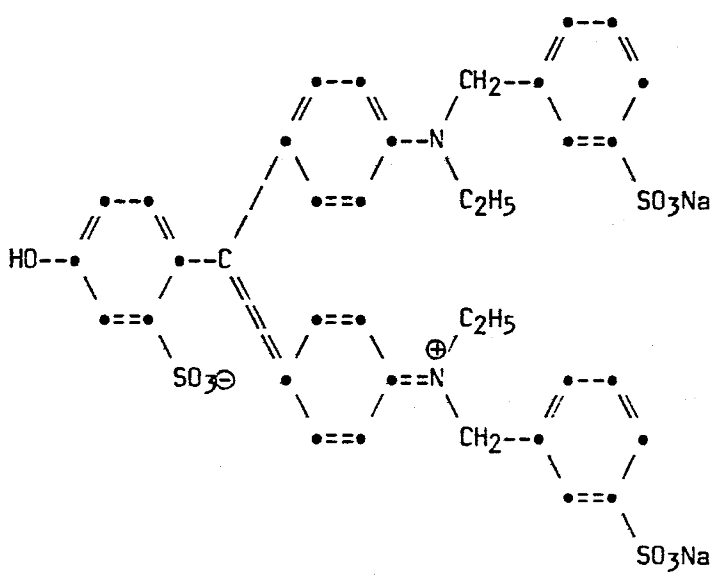

into the surfactant solution.

U.S. Patent 4,248,827, which issued February 3, 1981, discloses a method of treating a flush toilet each time it is flushed with a bromide-catalyzed hypochlorite sanitizing solution and a surfactant solution from a dual compartment dispenser for automatically dispensing the solution. A transitory visual signal is provided to indicate the activity of the sanitizing agent in the bowl by incorporating a dye selected from the group of those identified by the Color Index numbers 24401; 42040; 63010; 42085; 42675; and those having Color Index names Basic Blue 80, Reactive Blue 17 and Acid Blue 182 into the surfactant solution.

U.S. Patent 3,545,014, which issued December 8, 1970, discloses an automatic sanitizer for flush toilets which contains a blue dye known as Acid Blue 9 (Color Index 42090) stated to impart a blue color to the water in the bowl.

The most common sanitizing agent used in automatic toilet bowl sanitizers is a chemical compound which will generate hypochlorite ion in water. The hypochlorite ion is a strong oxidizing agent which makes it highly effective in bleaching stains, breaking down and removing soils and killing microorganisms, thereby providing effective sanitizing action to the toilet bowl. Although highly effective in bleaching stains, removing soil and killing microorganisms thereby providing effective sanitizing action in the toilet bowl, hypochlorite ion will also operate to bleach or oxidize any dye which is utilized as a colorant in the

automatic toilet bowl sanitizers. In any toilet bowl sanitizing system which is designed to provide a persistent visual signal between flushes, which period is commonly six to eight hours, any such system would require a dye which is resistant to attack by oxidizing agents such as hypochlorite and which would not be bleached to a colorless state or oxidized to a different and aesthetically displeasing shade or color. Currently known automatic toilet bowl sanitizers have been only partially successful in this regard and accordingly there is a need for an automatic toilet bowl sanitizing system which provides a stable visual color signal which persists for between six to eight hours between flushings.

Thus, it has now unexpectedly been found that certain phenothiazine and phenoxazine dyestuffs have superior resistance to attack by oxidizing agents, for example, hypochlorite and remain colored in the presence thereof for about eight hours. The present invention provides a method of sanitizing a toilet bowl wherein a sanitizing agent, a surface-active agent, and a water-soluble phenothiazine or phenoxazine dyestuff, which is resistant to attack by the sanitizing agent, are automatically dispensed to the toilet bowl during flushing. The water in the bowl at the end of the flush, which remains in the bowl during the widely-varying time intervals between flushes, retains a persistent color with no shade or color shift because of the dyestuff's resistance to attack by the sanitizing agent.

In its chief aspect, the invention relates to a method of providing a visual color which persists in the toilet bowl water between flushes, that is, the color is resistant to bleaching by the sanitizing agent to a colorless state or oxidation to a different shade or color between flushes.

More specifically, this invention relates to a method of treating a flush toilet which comprises a flush tank and bowl, with a sanitizing agent each time the toilet is flushed and providing a persistent color to the bowl water between flushes, said method comprising the step of dispensing into the flush water an aqueous solution which contains (A) a sanitizing agent, and (B) a phenothiazine or a phenoxazine dyestuff selected from the group having the formula

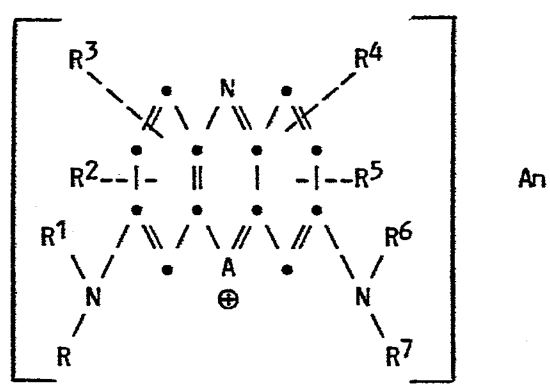

Formula I

in which A represents S or O; An represents an anion; R, $R^1$, $R^6$ and $R^7$ each independently represent hydrogen, non-tertiary $C_1$ to $C_4$ alkyl, benzyl or benzyl substituted in the benzene ring by one or two of non-tertiary $C_1$ to $C_4$ alkyl, non-tertiary $C_1$ to $C_4$ alkoxy, halogen or $SO_3M$ in which M represents an alkali metal cation, an ammonium cation or an alkaline earth metal cation; $R^2$ and $R^5$ independently represent hydrogen, non-tertiary $C_1$ to $C_4$ alkyl, hydroxy, non-tertiary $C_1$ to $C_4$ alkoxy, halogen, amino or dialkylamino in which alkyl represents non-tertiary $C_1$ to $C_4$ alkyl; and $R^3$ and $R^4$ independently represent hydrogen, or the group $SO_3M$ in which M represents an alkali metal cation, an ammonium cation or an alkaline earth metal cation.

In a first particular embodiment, the invention sought to be patented resides in a method of treating a flush toilet which comprises a flush tank and bowl, with a sanitizing agent each time the toilet is flushed and providing a persistent color to the bowl water between flushes, said method comprising the step of dispensing from separate dispensing means, into the flush water; (A) an aqueous solution of a sanitizing agent, and (B) a solution of a phenothiazine or a phenoxazine dyestuff selected from the group having Formula I hereinabove.

Within the ambit of the first embodiment of the invention, the method of treating a flush toilet wherein solution B contains a phenothiazine dyestuff having the formula

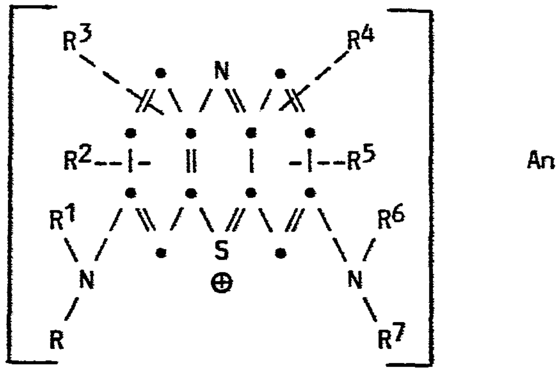

Formula II

in which R, $R^1$, $R^2$, $R^3$, $R^4$, $R^5$, $R^6$, $R^7$ and An have the same respective meanings given in Formula I.

Also within the ambit of the first embodiment of the invention is the method of treating a flush toilet wherein solution B contains a phenoxazine dyestuff having the formula

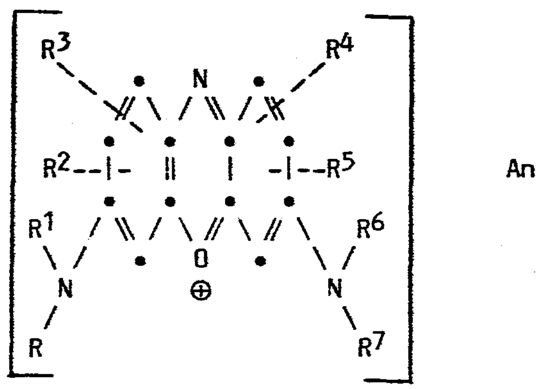

Formula III

in which R, $R^1$, $R^2$, $R^3$, $R^4$, $R^5$, $R^6$, $R^7$ and An have the same respective meanings given in Formula I.

A preferred sanitizing agent for use in the first particular embodiment is a sanitizing agent which produces hypochlorite ions in aqueous solution.

In a second particular embodiment, the invention sought to be patented resides in a method of treating a flush toilet which comprises a flush tank and bowl, with sanitizing agent each time the toilet is flushed and providing a persistent color to the bowl water between flushes, said method comprising the step of dispensing from a single dispensing means, into the flush water an aqueous solution which contains; (A) a sanitizing agent, and (B) a phenothiazine or a phenoxazine dyestuff selected from the group having Formula I hereinabove.

Within the ambit of the second embodiment of the invention is the method of treating a flush toilet wherein the aqueous solution contains a sanitizing agent and a phenothiazine dyestuff having the formula

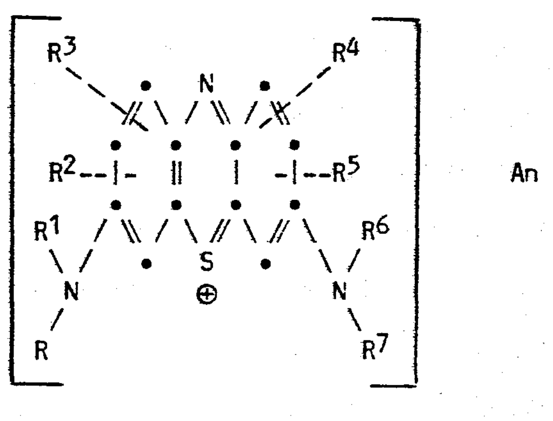

Formula II

in which R, $R^1$, $R^2$, $R^3$, $R^4$, $R^5$, $R^6$, $R^7$ and An have the same respective meanings given in Formula I.

Also within the ambit of the second embodiment of the invention is the method of treating a flush toilet wherein the aqueous solution contains a sanitizing agent and a phenoxazine dyestuff having the formula

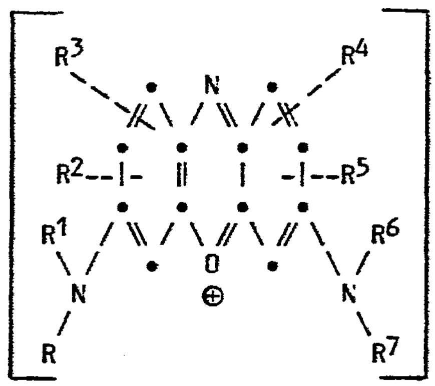

An

Formula II

in which R, $R^1$, $R^2$, $R^3$, $R^4$, $R^5$, $R^6$, $R^7$ and An have the same respective meanings given in Formula I.

A preferred sanitizing agent for use in the second particular embodiment is a sanitizing agent which produces oxygen in aqueous solution.

As used herein the term "non-tertiary $C_1$ to $C_4$ alkyl" denotes saturated monovalent straight or branched aliphatic hydrocarbon radicals including methyl, ethyl, propyl, isopropyl, butyl, isobutyl and the like.

As used herein the term "non-tertiary $C_1$ to $C_4$ alkoxy" denotes saturated monovalent straight or branched aliphatic groups such as methoxy, ethoxy, propoxy, isopropoxy, butoxy, isobutoxy and the like.

As used herein the term "alkali metal cation" includes lithium, sodium and potassium cations.

As used herein the term "alkaline earth metal cation" includes magnesium and calcium cations.

As used herein the term "halogen" includes fluoro, chloro, bromo and iodo. Chloro is the preferred halogen substituent because of the relatively low cost and the ease of the preparation of the required chloro-substituted intermediates and because the other halogen substituents offer no particular advantage over the chloro. However, the other above-named halogen substituents are also satisfactory.

As used herein, the term "An" represents anion. By anion is meant any monovalent, divalent or trivalent ion derived from an organic or inorganic acid, H anion, by the removal of an acidic hydrogen ion(s). Exemplary anions are: halide, hydroxy, alkanoate, hydroxy alkanoate, sulfate, nitrate, phosphate, chromate, alkylsulfonate and arylsulfonate. Other anions are found in the literature, for example, Hackh's Chemical Dictionary, 3rd Edition (1946), at pages 12-13, and Chemical Abstracts, Vol. 56, nomenclature at pages 72n-80n, both incorporated herein by specific reference thereto. As is known, one anion can be changed to another anion by use of conventional ion exchange methods. Sulfate and halides, i.e., chloride, bromide, fluoride and iodide, and in particular, sulfate, chloride and bromide are particularly preferred as the anion because of relatively low cost and ease of preparation of the dyestuffs containing sulfate and chloride anion.

The sanitizing agent which can be used in the practice of the present invention is any compound which will effectively clean and/or sterilize the bowl of the toilet. The preferred sanitizing agents which can be used, and to which the colorant is resistant to attack, are compounds which exhibit germicidal or disinfectant properties and which have oxidizing characteristics, that is, are ones which generate oxygen or hypochlorite ion in an aqueous solution. Compounds included within this group which generate oxygen are the alkali metal and alkaline earth metal salts of the peroxy acids such as perborates, percarbonates, peroxides and persulfates.

Compounds included within the group which generate hypochlorite ion in aqueous solution are the alkali and alkaline earth metal hypochlorites, hypochlorite addition products, chloramines, chlorimines and chloramides. Specific examples of this type of compound are: sodium hypochlorite, potassium hypochlorite, lithium hypochlorite, calcium hypochlorite, calcium hypochlorite dihydrate, monobasic calcium hypochlorite, dibasic magnesium hypochlorite, chlorinated trisodium phosphate dodecahydrate, potassium dichloroisocyanurate, sodium dichlorocyanurate dihydrate, 1,3-dichloro-5,5-dimethylhydantoin, N-chlorosulfamide, Chloramine T, Dichloramine T, Chloramine B and Dichloramine B. Also, free acids such as trichloroisocyanuric acid may be used as a source of hypochlorite.

The hypochlorite ion generating compounds are particularly preferred as sanitizing agents in the automatic toilet bowl cleaners because they are relatively inexpensive and exhibit a high degree of sanitizing strength per unit weight. The amount of oxidizing agent such as, hypochlorite-providing compound, dispensed into the toilet by the so-called automatic toilet bowl cleaner may vary, but it is preferred that the amount released be sufficient to provide from approximately 0.5 parts per million to approximately twenty parts per million of available chlorine or the equivalent thereof in the bowl water after completion of the flush.

Another effective sanitizing agent is oxalic acid.

Essential to the method of the instant invention is the use of a water-soluble, bleach-resistant dye of Formula I which is sufficiently resistant to oxidation that the solution of the dye in the toilet bowl will not be oxidized to a different shade or color or to a colorless state by the oxidizing agent in the bowl for a time period of from six hours to approximately eight hours, typically the maximum time interval between flushes in the average household.

The dyes of Formula I are not completely stable to attack by the oxidizing agent; however, they are sufficiently resistant to attack to adequately serve as colorants for use in automatic toilet bowl cleaners. When there is a long time interval between flushes, there will be some fading of the color in the bowl water due to the slow attack by the oxidizing agent on the dye, but the water will not change color or shade, nor will it become colorless.

The amount of dye which is dispensed into the water of the toilet bowl is dependent on the color intensity desired and the amount of sanitizing agent dispensed by the automatic cleaner. In general, the amount of dye dispensed by the automatic cleaners will vary between approximately 0.05 parts per million to approximately 10 parts per million in the water of the toilet bowl after the flushing is completed.

The phenothiazine and phenoxazine dyes of Formula I are generally known dyestuffs readily prepared by procedures well known in the dyestuff art. Four references to the preparation of the phenothiazine dyestuffs are: (a) Journal of the Society of Dyers and Colourists 4, 39 (1888); (b) Liebig's Annalen der Chemie 251, 1 (1889); (c) Chemische Berichte 25, 3128 (1892); (d) FIAT Final Report No. 1313; and PB Report 85172, Vol. II, p. 372.

One of the preferred phenothiazine dyestuff which is useful in the present invention is commonly known as Thiocarmine R which has the formula

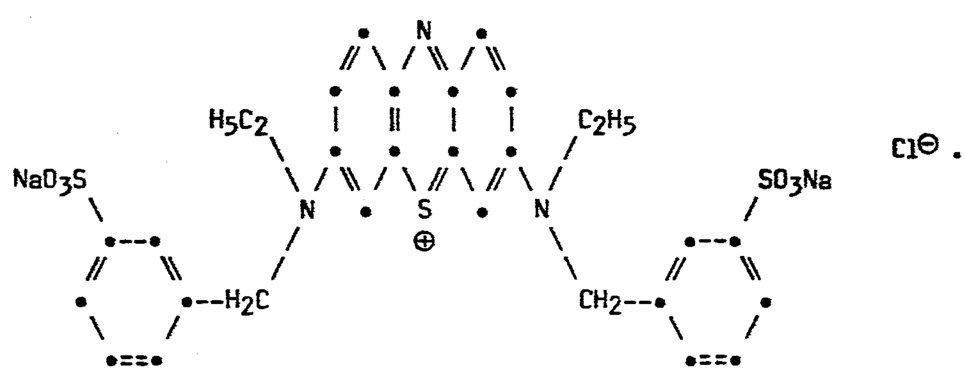

C.I. 52035

Further preferred phenothiazine dyestuffs useful in this invention have the following formulas

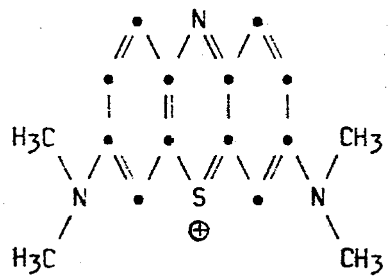

Cl⊖ ;

C.I. 52015

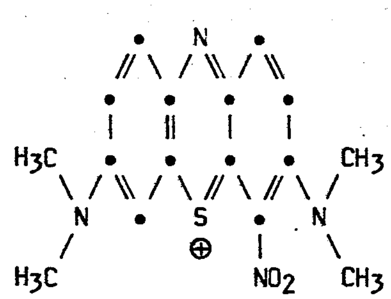

Cl⊖ ;

Color Index Basic Green 5

C.I. 52020

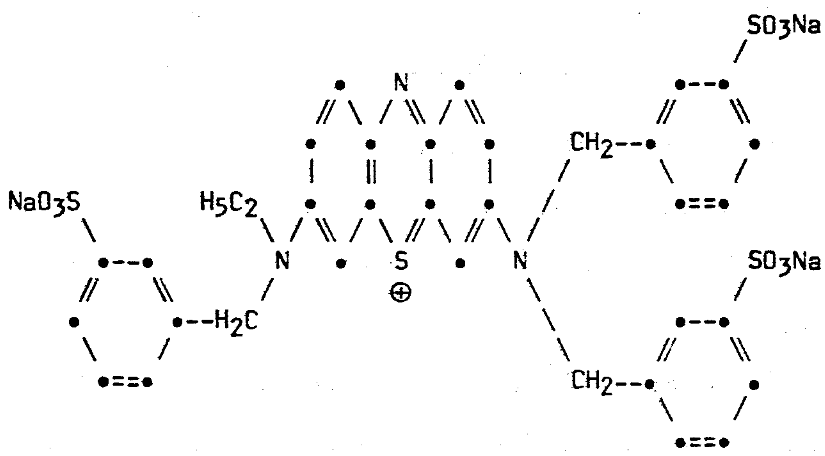

Cl⊖ ;

and

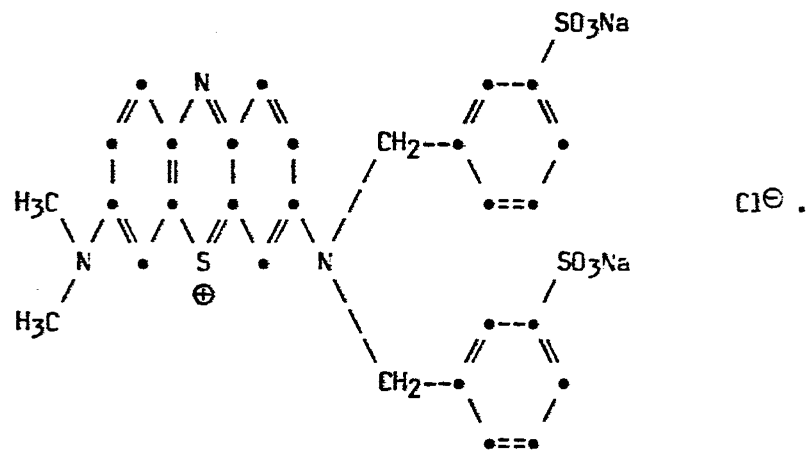

A phenoxazine dyestuff which is useful in the present invention is known as Color Index Basic Blue 3 and has the following formula

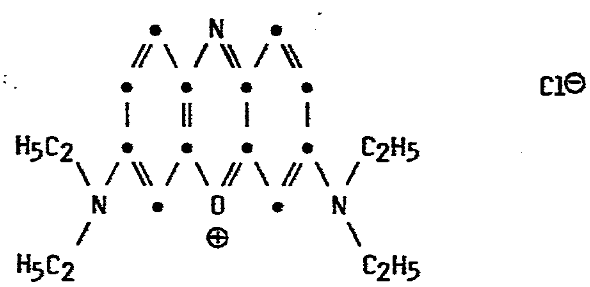

C.I. 51004

The dyestuffs useful in the present invention are not limited to those depicted structurally hereinabove but to all of the dyestuffs which come within the scope of Formula I.

Surface active agents are usually added to the automatic sanitizers because these agents enhance the sanitizing performance by breaking up and emulsifying the soils present in the bowl, and further, the sudsing

action caused by these agents is aesthetically desirable.

The surface active agents are generally combined with a dyestuff of Formula I and an inorganic salt which may also serve as a sequestering agent or a pH control agent but, in any event, the inorganic salt aids in dissolving the dye and the surface active agent. Optionally, a perfume may be added to this composition to provide a pleasant smell to the area surrounding the toilet and also to help mask the hypochlorite odor of the hypochlorite-type of sanitizing agent. The compositions containing the dye of Formula I. the surface active agent and other optional components are generally prepared in the form of a cake which is conveniently placed into one of the compartments of the dual compartment dispensers designed to receive said cake of solid material. A cake containing the sanitizing agent is placed into the second compartment of the dual compartment dispenser. In the case of the single compartment dispensers, the surface active agent, the sanitizing agent, the dye of Formula I and optional ingredients are formed into a cake and placed in the dispenser designed to receive said cake of solid material. The cakes can be prepared by pouring a melt of the composition into a mold and solidifying the composition by cooling. Alternatively, the cakes can be prepared by extrusion or hydraulic stamping.

Surface active agents operable in compositions suitable for use in practicing the present invention can be selected from the broad groups known as nonionic and anionic agents, ampholytic, zwitterionic and cationic

surface active agents. One group of nonionic surface agents which can be utilized in the present invention is the alkylene oxide condensates which are broadly defined as compounds produced by the condensation of alkylene oxide groups (hydrophilic in nature) with an organic hydrophobic compound. Examples of such alkylene oxide condensates are the products of aliphatic alcohols with ethylene oxide. The aliphatic alcohol generally has an alkyl chain which can be either straight or branched and contains from about eight to about twenty-two carbon atoms. An example of ethoxylated alcohols is the condensation of ethylene oxide with tridecanol. An example of a commercially available nonionic surface active agent of this type is Emulphogene® TB-970 (GAF Corp.). Other products which vary in the carbon chain length of the aliphatic alcohols and the number of moles of ethylene oxide per mole of alcohol can be used. Other examples of commercially available nonionic surface active agents are Neodol® 25-9 (Shell Chemical Co.) and Tergitol® 15-S-12 (Union Carbide Corp.). Other nonionic surface active agents which can be used in the present invention include the polyethylene oxide condensates of alkyl phenols; the condensation products of ethylene oxide with the product resulting from the reaction of propylene oxide and ethylene diamine; the ammonia, monoethanol and diethanol amides of fatty acids having an acyl moiety of from about 8 to about 18 carbon atoms; and the semi-polar nonionic surface active agents, for example, amine oxides, phosphine oxides and sulfoxides. Cationic surface active agents which are useful in the present invention are the

quaternary ammonium compounds, for example, coconut dimethyl benzyl ammonium chloride. Examples of anionic surface active agents are the water-soluble alkali metal salts of organic sulfonic acid reaction products such as the sodium or potassium salts of sulfonated $C_8$ to $C_{18}$ alcohols and glyceride sulfonates.

The dispensing means which operate to dispense the sanitizing agent and dye-surfactant can be either a single dispensing or dual dispensing type. In the dual dispensing type, the sanitizing agent and the dye-surfactant are dispensed from separate containers. Such devices are known in the art, for example, as described in U.S. Patents 3,504,384; 4,200,606; 4,248,827; 4,249,274; and 4,353,866. There are several commercial automatic toilet bowl sanitizers on the market which are dual dispensing devices.

The dispensing means which operate to dispense a single solution containing the sanitizing agent, dye and surfactant is a single dispenser. Such devices are known in the art, for example, as described in U.S. Patents 3,698,-021; 3,604,020; 4,305,162; and 4,375,109. There are numerous commercial automatic toilet bowl sanitizers on the market which are single dispensing devices.

The longevity of the dyestuff color in the sanitizing solution was measured by simulating the conditions which exist in the toilet bowl after the flushing cycle was completed when an automatic toilet bowl sanitizer was used. Solutions were prepared which contained 2.5 parts per million of dyestuff, 40.0 parts per million of a surface active agent and 40.0 parts per million of sodium sulfate.

After an initial visible spectrum reading was taken, sufficient sodium hypochlorite solution or trichloroisocyanuric acid solution equal to 10.0 parts per million of available free chlorine was added to the dyestuff solution and spectrophotometer readings were taken automatically at specified pre-set time intervals depending on the dyestuff tested and the sanitizing agent employed. The dyestuffs of this invention were compared with FD&C Blue No. 1 and FD&C Green No. 3, the dyestuffs disclosed in U.S. Patent 4,200,-606 for the length of time the color persisted in the simulated bowl water.

A simple qualitative test for the persistence of the dyestuffs of Formula I in the presence of a sanitizing agent was carried out by dissolving the dyestuff in distilled water and adding sufficient dyestuff solution to one liter of distilled water thereby adjusting the resulting solution to the same visual strength as a solution of FD&C Blue No. 1. One such solution served as a control and another was treated with sufficient sanitizing agent to give a concentration of 10.0 parts per million in the sanitizing solution. The persistence of color in the presence of sanitizing agent was determined visually by comparison with the control. In testing for the longevity of the dyestuff color in the presence of hypochlorite-ion-generating sanitizing agents, three solutions were prepared in this manner, one a control, and the remaining two solutions were tested with sanitizing agents. One was tested with a solution of trichloroisocyanuric acid, and the second with sodium

hypochlorite solution. The amount of hypochlorite-ion-generating sanitizing agent added was equal to 10.0 parts per million of available chlorine in the dilute dyestuff solution. The amount of dyestuff remaining in the solution was visually observed and compared to the control.

In order to carry out direct use tests, the dual dispensing devices for the dye-containing surface active agent cake and the sanitizing agent cake were prepared to simulate commercially available dispensers. Thus, a commercial cake of trichloroisocyanurate was used in conjunction with a prepared surface-active agent cake containing a dyestuff of Formula I. The dual dispenser device was then tested in a flush toilet by inserting it into the tank. The persistence of the color of the bowl water and staining effects were observed after several flushes with intermittent periods of standing between flushes.

Also, to carry out direct use tests, single dispensing devices for a cake containing a dyestuff of Formula I, a surface-active agent and a sanitizing agent were prepared to simulate commercially available dispensers. The dispensing device was then tested in a flush toilet by inserting it into the tank. The persistence of the color of the bowl water and staining effects were observed after several flushes with intermittent periods of standing between flushes.

The persistence of the phenothiazine and phenoxazine dyestuffs of Formula I in the presence of oxidizing agents and in particular in the presence of hypochlorite and perborate was compared to the prior art triarylmethane dyestuffs, namely, FD&C Blue No. 1 (C.I. 42090) and FD&C Green No. 3 (C.I. 42053) under conditions which simulated those which exist in the toilet bowl after the flushing cycle was completed as well as in the actual toilet bowl tests. The procedures employed are described in the following comparative examples.

COMPARATIVE EXAMPLE 1

A. To approximately 1.0 liter of distilled water adjusted to a pH in the range of 8.0 to 8.5 with dilute sodium hydroxide solution, there was added 3.7 ml of a solution of 1.0 g of FD&C Blue No. 1 dissolved in 1.0 liter of distilled water. To the resultant dyestuff solution 4.0 ml of a solution consisting of 10.0 g of a surface active agent (Emulphogene® TB-970, GAF Corp.) and 10.0 g of sodium sulfate dissolved in 1.0 liter of distilled water was added.

B. The visible spectrum of a sample of the solution from Part A above was recorded with a Perkin-Elmer Lambda 5 UV/VIS Spectrophotometer. To the solution from Part A above, 2.0 ml of a solution consisting of 1.0 ml of 5.0 percent active sodium hypochlorite dissolved in 9.0 ml of distilled water was added and immediately after a brief mixing, the visible spectrum of a sample of the mixed

solutions was recorded with the spectrophotometer. Subsequent readings were taken and recorded automatically by the instrument at several time intervals as indicated in Table I hereinbelow.

TABLE I

FD&C Blue No. 1

| Elapsed Time (Minutes) | Percent Color Remaining in Presence of Sodium Hypochlorite |
|---|---|
| 0 | 100.0 |
| 2 | 99.5 |
| 4 | 96.0 |
| 64 | 71.0 |
| 124 | 47.0 |
| 184 | 25.0 |
| 244 | 11.0 |
| 304 | 3.0 |

C. To a second solution prepared in a manner similar to that described in Part A above, 11.0 ml of a solution consisting of 1.0 g of 88 percent active trichloroisocyanuric acid dissolved in 1.0 liter of distilled water was added and the visible spectrum of a sample was recorded as described in Part B above as indicated in Table II hereinbelow.

TABLE II

FD&C Blue No. 1

| Elapsed Time (Minutes) | Percent Color Remaining in Presence of Trichloroisocyanuric Acid |
|---|---|
| 0 | 100.0 |
| 4 | 84.0 |
| 14 | 49.0 |
| 24 | 32.0 |
| 34 | 26.0 |
| 44 | 23.0 |
| 54 | 22.2 |
| 64 | 22.2 |
| 74 | 22.2 |
| 84 | 22.2 |

The shade of the solution shifted toward the red end of the visible spectrum.

COMPARATIVE EXAMPLE 2

Following the procedure described in Part A of Comparative Example 1, a dyestuff solution was prepared by substituting for the solution of FD&C Blue No. 1, 1.5 ml of a solution containing 1.0 g of FD&C Green No. 3 dissolved in 1.0 liter of distilled water adjusted to pH 8.0 to 8.5 using a dilute solution of sodium hydroxide. Parts B and C of Comparative Example 1 were repeated using the FD&C Green No. 3 solution. The test results are indicated in Tables III and IV hereinbelow.

TABLE III

FD&C Green No. 3

| Elapsed Time (Minutes) | Percent Color Remaining in Presence of Sodium Hypochlorite |
|---|---|
| 0 | 100.0 |
| 2 | 100.0 |
| 62 | 61.0 |
| 122 | 31.0 |
| 182 | 12.0 |

TABLE IV

FD&C Green No. 3

| Elapsed Time (Minutes) | Percent Color Remaining in Presence of Trichloroisocyanuric Acid |
|---|---|
| 0 | 100.0 |
| 2 | 88.0 |
| 12 | 46.0 |
| 22 | 35.0 |
| 32 | 29.0 |
| 42 | 24.0 |
| 52 | 22.0 |
| 62 | 19.0 |

In the presence of sodium hypochlorite, no significant change in the shade of the solution was observed. In the presence of trichloroisocyanuric acid, the shade of the solution was observed to have a moderate shift to the red end of the spectrum after twelve minutes.

EXAMPLE 1

The procedure described in the Comparative Example 1, Part A was followed except that the FD&C Blue No. 1 solution was replaced with 7.4 ml of a solution containing 1.0 g of the dyestuff having the formula

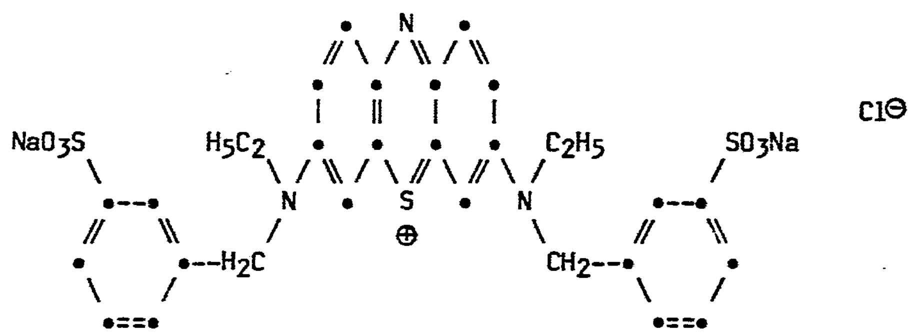

C.I. 52035

dissolved in 1.0 liter of distilled water adjusted to pH 8.0 to 8.5 using a dilute solution of sodium hydroxide.

Parts B and C of the Comparative Example 1 were repeated with the above solution with the test results indicated in Tables V and VI hereinbelow.

TABLE V

| Elapsed Time (Minutes) | Percent Color Remaining in Presence of Trichloroisocyanuric Acid |
|---|---|
| 0 | 100.0 |
| 62 | 96.0 |
| 122 | 90.0 |
| 182 | 90.0 |
| 242 | 90.0 |
| 302 | 90.0 |
| 362 | 91.0 |
| 422 | 91.0 |

TABLE VI

| Elapsed Time (Minutes) | Percent Color Remaining in Presence of Sodium Hypochlorite |
|---|---|
| 0 | 100.0 |
| 2 | 96.0 |
| 62 | 84.0 |
| 122 | 76.0 |
| 182 | 69.0 |
| 242 | 64.0 |
| 302 | 62.0 |
| 362 | 62.0 |
| 422 | 62.0 |

There was no shift in the shade of the dyestuff solution. After a period of about five hours, approximately 20 times more dyestuff identified as C.I. 52035 remained in sodium hypochlorite sanitizing solution than the dyestuff identified as FD&C Blue No. 1. After a period of about one hour, 4.35 times more dyestuff identified as C.I. 52035 remained

in trichloroisocyanuric acid sanitizing solution than the dyestuff identified as FD&C Blue No. 1.

EXAMPLE 2

Following the procedure described in Comparative Example 1, Part A above, a dyestuff solution was prepared using in place of the FD&C Blue No. 1 solution 6.0 ml of a solution containing 1.0 g of Basic Blue No. 3 (C.I. 51004) having the formula

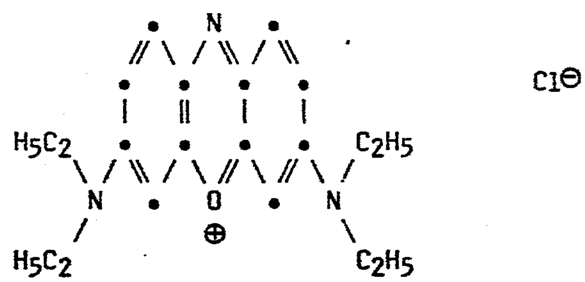

dissolved in 1.0 liter of distilled water adjusted to pH 8.0 to 8.5 using a dilute solution of sodium hydroxide.

Part C of Comparative Example 1 above was repeated using the solution prepared above. The test results are given in Table VII hereinbelow.

TABLE VII

| Elapsed Time (Minutes) | Percent Color Remaining in Presence of Trichloroisocyanuric Acid |
|---|---|
| 0 | 100.0 |
| 2 | 97.0 |
| 62 | 63.0 |
| 122 | 50.0 |
| 182 | 44.0 |
| 242 | 42.0 |
| 302 | 41.0 |
| 362 | 42.0 |
| 422 | 42.0 |

There was no shift in the visible color of the dyestuff solution. After a period of about one hour, approximately 2.8 times more dyestuff identified as C.I. 51004 remained in trichloroisocyanuric acid sanitizing solution than the dyestuff identified as FD&C Blue No. 1.

EXAMPLE 3

One gram of the dyestuff

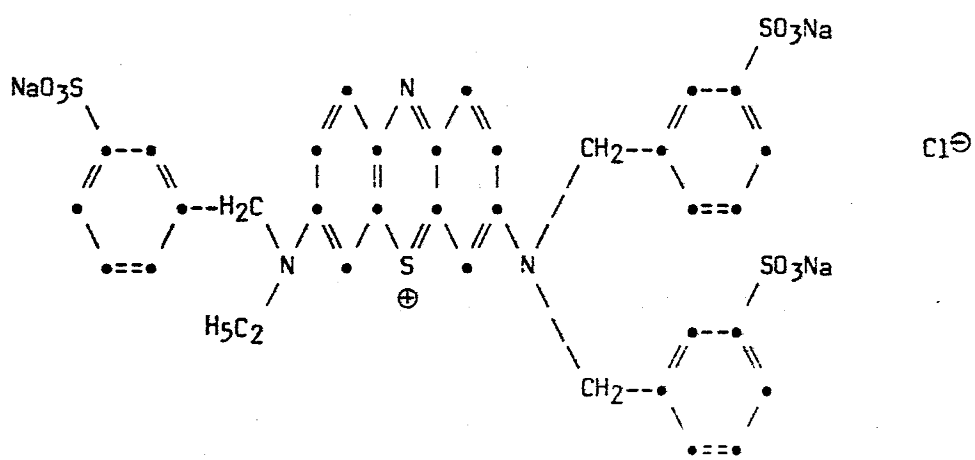

was dissolved in 1.0 liter of distilled water which had been adjusted to a pH in the range of 8.0 to 8.5. With manual stirring, 48.0 ml of the dyestuff solution was added to 1.0 liter of distilled water to prepare a dilute dyestuff solution which was visually equivalent to a standard solution of FD&C Blue No. 1. Additionally, two identical solutions of the above-identified dyestuff were prepared. One of the dyestuff solutions was kept as a control. To a second solution, 2.0 ml of a solution consisting of 1.0 ml of 5.0 percent active sodium hypochlorite dissolved in 9.0 ml of water was added. To the third solution, 11.0 ml of a solution consisting of 1.0 g of 88 percent active trichloroisocyanuric acid dissolved in 1.0 liter of distilled water was added. The solutions were observed for the amount of color remaining after one hour, five hours and twenty hours and the results are indicated in Table VIII hereinbelow.

TABLE VIII

| | Percent Color Remaining | |
|---|---|---|
| Elapsed Time (Hours) | Presence of Sodium Hypochlorite | Presence of Trichloroisocyanuric Acid |
| 0 | 100.0 | 100.0 |
| 1 | 40.0 | 40.0 |
| 5 | 40.0 | 20.0 |
| 20 | 10.0 | 20.0 |

There was no shift in the visible color of the dyestuff solution. After a period of about five hours, approximately 13.3 times more dyestuff identified above remained in

sodium hypochlorite sanitizing solution than the dyestuff identified as FD&C Blue No. 1. After a period of about one hour, approximately 1.8 times more dyestuff identified above remained in trichloroisocyanuric acid sanitizing solution than the dyestuff identified as FD&C Blue No. 1.

EXAMPLE 4

One gram of the dyestuff

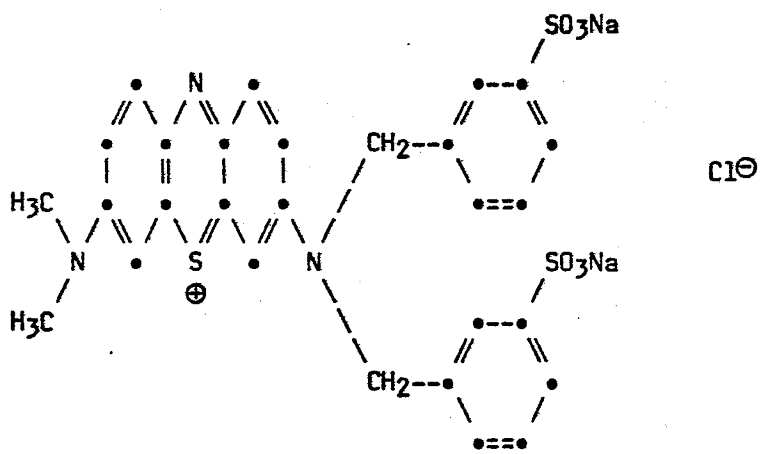

was dissolved in 1.0 liter of distilled water which had been adjusted to pH in the range of 8.0 to 8.5. With manual stirring, 48.0 ml of the dyestuff solution was added to 1.0 liter of pH adjusted distilled water to prepare a dilute dyestuff solution which was visually equivalent to a standard solution of FD&C Blue No. 1. Additionally, two identical solutions of the above-identified dyestuff were prepared. One of the dyestuff solutions was kept as a control. To a second solution, 2.0 ml of a solution consisting of 1.0 ml of 5.0 percent active sodium hypochlorite dissolved in 9.0 ml of water was added. To the

third solution, 11.0 ml consisting of 1.0 g of 88 percent active trichloroisocyanuric acid dissolved in 1.0 liter of distilled water was added. The solutions were observed for the amount of color remaining after one hour, five hours and twenty hours and the results are indicated in Table IX hereinbelow.

TABLE IX

| Elapsed Time (Hours) | Percent Color Remaining: Presence of Sodium Hypochlorite | Presence of Trichloroisocyanuric Acid |
|---|---|---|
| 0 | 100.0 | 100.0 |
| 1 | 75.0 | 40.0 |
| 5 | 60.0 | 20.0 |
| 20 | 25.0 | 20.0 |

There was no shift in the visible color of the dyestuff solution. After a period of about five hours, approximately 20 times more dyestuff identified above remained in sodium hypochlorite sanitizing solution than the dyestuff identified as FD&C Blue No. 1. After a period of about one hour, approximately 1.8 times more dyestuff identified above remained in trichloroisocyanuric acid sanitizing solution than the dyestuff identified as FD&C Blue No. 1.

EXAMPLE 5

A dual compartment automatic dispensing sanitizer for tank and bowl toilets was prepared as follows. A dye-surfactant cake was prepared by heating together 5.0 g of the dye having the formula

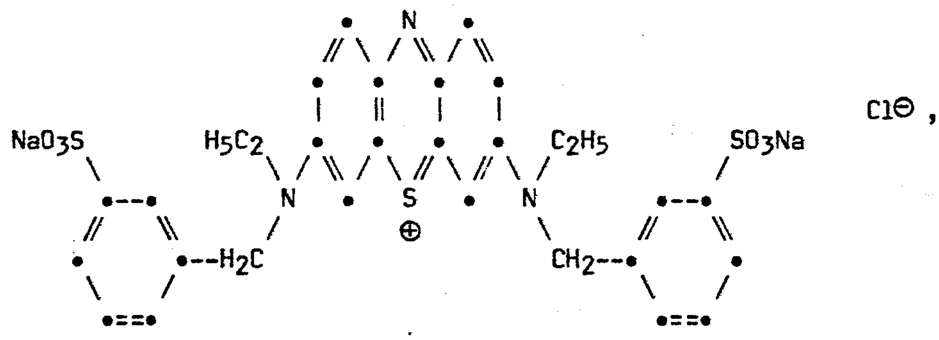

C.I. 52035

33.0 g of anhydrous sodium sulfate and 33.0 g of Emulphogene® TB-970 (GAF Corp.), a commercial tridecyloxypoly(ethyleneoxy)ethanol surfactant to form a uniform mixture. The molten mixture was placed into a form and cooled to obtain a solid cake. The cake was inserted into one compartment and a cake containing a trichloroisocyanurate sanitizing agent was placed in the second compartment. Then the assembled dispenser was placed into the tank of a conventional tank and bowl flush toilet. After several flushing cycles, the sanitizing solution remaining in the bowl when the flushing cycle was completed remained blue until the next flush. The time between flushes varied

from several minutes to over six hours. A similar dual compartment automatic dispensing sanitizer for tank and bowl toilets was prepared substituting the dyestuff FD&C Blue No. 1 for C.I. 52035. The blue color in the sanitizing solution remaining in the bowl when the flushing cycle was completed, faded and after six hours, the solution was colorless.

## EXAMPLE 6

A. A solution was prepared by dissolving 0.25 g of the dyestuff

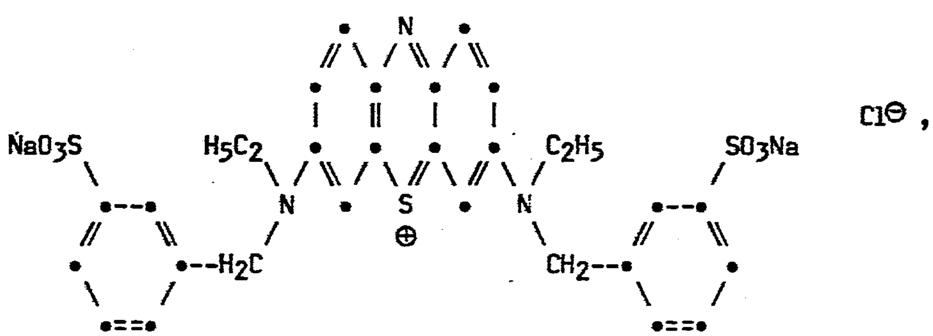

C.I. 52035

in 1.0 liter of distilled water.

B. With manual stirring, 8.8 ml of the dyestuff solution from Part A above was diluted to 1.0 liter with distilled water and 26.0 ml of a solution of 1.0 g of 38.5 percent active hydrogen peroxide diluted in 1.0 liter of distilled water was added. After four hours of elapsed time the resulting solution was observed to have approximately 85 percent of the dyestuff remaining in the presence of the hydrogen peroxide.

C. To a solution comprising 8.8 ml of the dyestuff solution from Part A above diluted to 1.0 liter with distilled water, there was added 10.0 ml of a solution of 1.0 g of potassium persulfate dissolved in 1.0 liter of distilled water. After three hours of elapsed time, the resulting solution was observed to have approximately 80 percent of the dyestuff remaining.

D. With manual stirring, 8.8 ml of the dyestuff solution from Part A above was diluted to 1.0 liter with distilled water and 10.0 ml of a solution of 1.0 g of oxalic acid dissolved in 1.0 liter of water was added. After three hours of elapsed time, the resulting solution was observed to have approximately 85 percent of the dyestuff remaining.

E. To a solution comprising 8.8 ml of the dyestuff solution from Part A above diluted to 1.0 liter with distilled water, there was added 10.0 ml of a solution of 1.0 g of sodium perborate dissolved in 1.0 liter of distilled water. After three hours of elapsed time, the resulting solution was observed to have approximately 85 percent of the dyestuff remaining.

F. With manual stirring, 8.8 ml of the dyestuff solution from Part A above was diluted to 1.0 liter with distilled water and 10.0 ml of a solution consisting of 1.0 g of Chloramine T hydrate dissolved in 1.0 liter of distilled water was added. After three hours of elapsed time, the resulting solution was observed to have approximately 85 percent of the dyestuff remaining.

G. To a solution comprising 8.8 ml of the dyestuff solution from Part A above diluted to 1.0 liter with distilled water, there was added 10.0 ml of a solution of 1.0 g of 56 percent active 1-bromo-3-chloro-5,5-dimethylhydantoin dissolved in 1.0 liter of distilled water. After thirty minutes of elapsed time, the resulting solution was observed to have approximately 30 percent of the dyestuff remaining.

## EXAMPLE 7

A solid block automatic dispensing cleansing unit for tank and bowl toilets was prepared as follows. A dye-surfactant cake was prepared by heating together 100.0 g of Emulphogene® TB-970 (GAF Corp.), a commercial tridecyloxypoly(ethyleneoxy)ethanol surfactant, 100.0 g of anhydrous sodium sulfate and 4.0 g of the dye having the formula

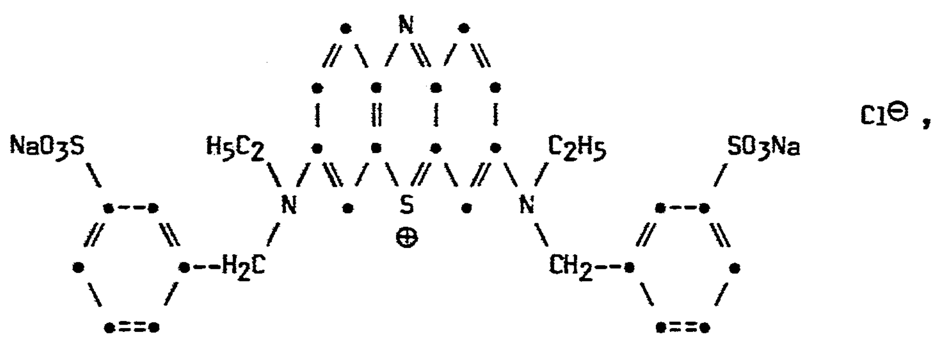

C.I. 52035

to form a uniform mixture. The molten mixture was placed into a form and cooled to obtain a solid cake. The cake was inserted into an automatic dispenser and then the assembled dispenser was placed into the tank of a conventional tank and bowl flush toilet. After several flushing cycles, the solution remaining in the bowl when the flushing cycle was complete remained blue until the next flush. The time between flushes varied from several minutes to over six hours.

EXAMPLE 8

An in-bowl deoderizing cleanser cake for a toilet was prepared as follows. A dye-surfactant cake was prepared by heating together 75.0 g of Emulphogene® TB-970 (GAF Corp.), a commercial tridecyloxypoly(ethyleneoxy)ethanol surfactant, 25.0 of anhydrous sodium sulfate and 0.4 ml of a one percent aqueous solution of the dye having the formula

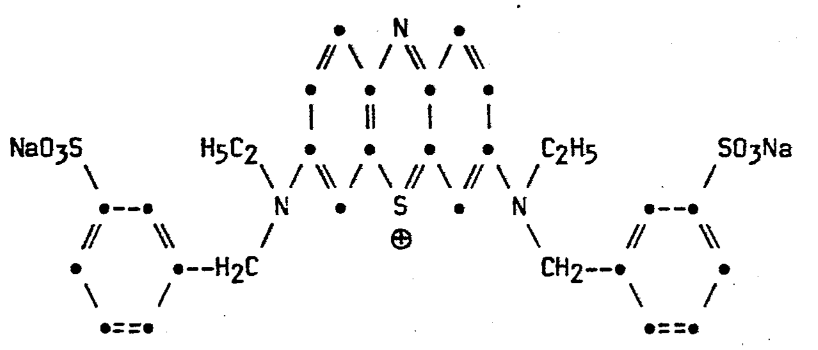

$Cl^{\ominus}$,

and 7.0 g of perfume to form a uniform mixture. The molten mixture was placed into a form and cooled to obtain a solid cylindrical cake. The cake was inserted into a slotted plastic dispenser. The assembled dispenser was placed into the bowl of a conventional flush toilet by hanging it on the rim of the bowl. After several flushing cycles, the solution remaining in the bowl when the flushing cycle was completed remained blue until the next flush. The time

intervals between flushes varied from several minutes to over six hours.

EXAMPLE 9

A single compartment automatic liquid dispensing sanitizer for tank and bowl toilets was prepared as follows. A dye solution was prepared by stirring together a mixture of 384.0 ml of water, 12.0 g of Igepal® CO-630 (GAF Corp.), a commercial nonylphenoxypoly(ethyleneoxy)ethanol surfactant and 4.0 g of the dye having the formula

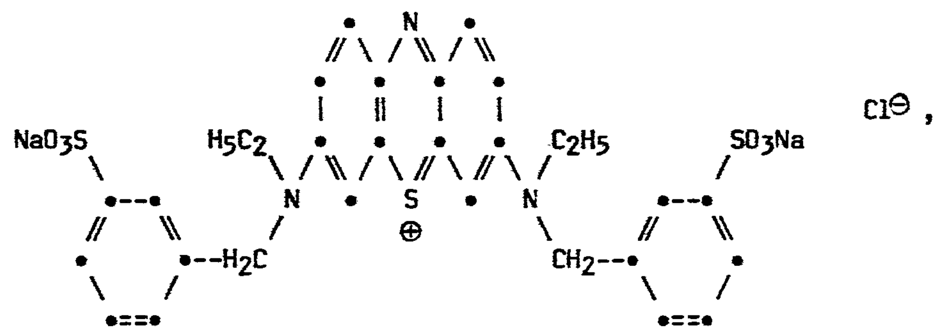

to form a solution. The solution was placed in an automatic dispenser which discharged approximately 3.0 ml of solution each time the valve on the dispenser was activated. The filled dispenser was placed into the tank of a conventional tank and bowl flush toilet. After the flushing cycle, the cleansing solution in the bowl remained blue until the next flush. The time intervals between flushes varied from several minutes to over six hours.

EXAMPLE 10

A liquid acid type sanitizer unit for tank and bowl toilets was prepared as follows. A dye-surfactant-disinfectant solution was prepared by stirring together at ambient temperature a mixture of 300.0 ml of water and 1.0 g of the dye having the formula

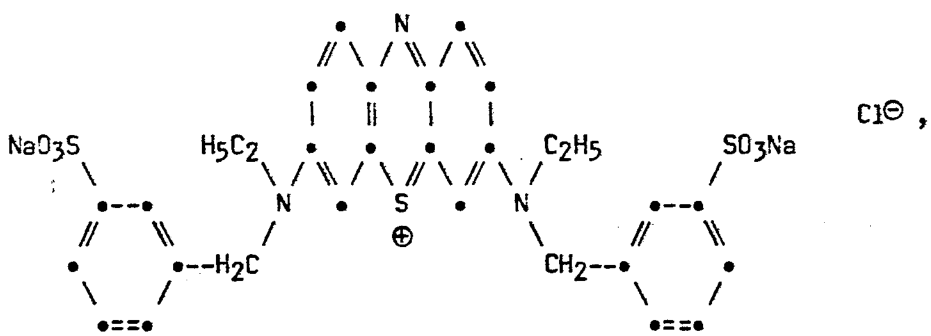

and after solution was complete, there was added 100.0 ml of concentrated hydrochloric acid and 16.0 g of 50 percent active $C_{12}$ to $C_{16}$ alkyl dimethylbenzyl ammonium chloride. The resulting blue solution was placed into a plastic bottle with a squirt-type top. The sanitizing solution was sprayed into the toilet bowl and manually brushed around the toilet. The resulting sanitizing solution in the bowl remained blue until the toilet was flushed. The time intervals between flushes varied from several minutes to over six hours.

EXAMPLE 11

A single compartment automatic dispensing sanitizer for tank and bowl toilets was prepared as follows. A dye-surfactant-sanitizer cake was prepared by heating together 100.0 g of Emulphogene® TB-970 (GAF Corp.), a commercial tridecyloxypoly(ethyleneoxy)ethanol surfactant, 100.0 g of sodium perborate tetrahydrate and 4.0 g of the dye having the formula

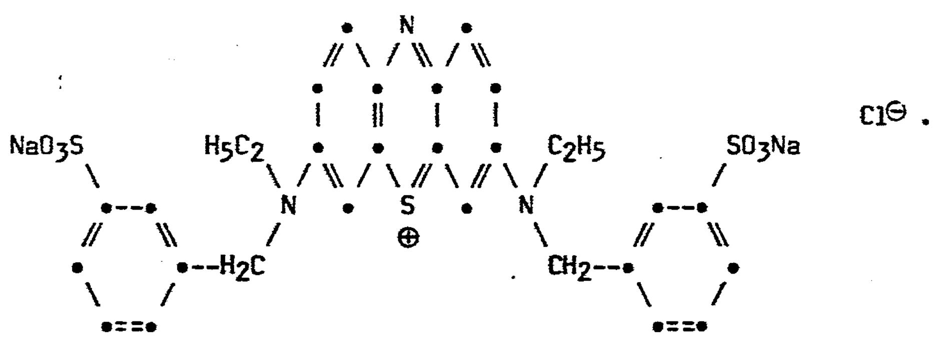

The molten mixture was placed into a form and cooled to form a solid cake. The cake was inserted into a single compartment automatic dispenser. The assembled dispenser was placed into the tank of a conventional tank and bowl flush toilet. After several flushing cycles, the sanitizing solution remaining in the bowl when the flushing cycle was completed remained blue until the next flush. The time between flushes varied from several minutes to over six hours. A similar single compartment automatic dispensing sanitizer for tank and bowl toilets was prepared substituting the dyestuff FD&C Blue No. 1 for C.I. 52035. The unit containing the FD&C Blue No. 1 did not produce a blue color in the water remaining in the bowl after the flushing cycle.

CLAIMS

1. A method of treating a flush toilet which comprises a flush tank and bowl, with a sanitizing agent each time the toilet is flushed, and providing a persistent color to the bowl water between flushes, said method comprising dispensing in solution into the flush water: (A) a sanitizing agent; and (B) a phenothiazine or a phenoxazine dyestuff selected from the group having the formula

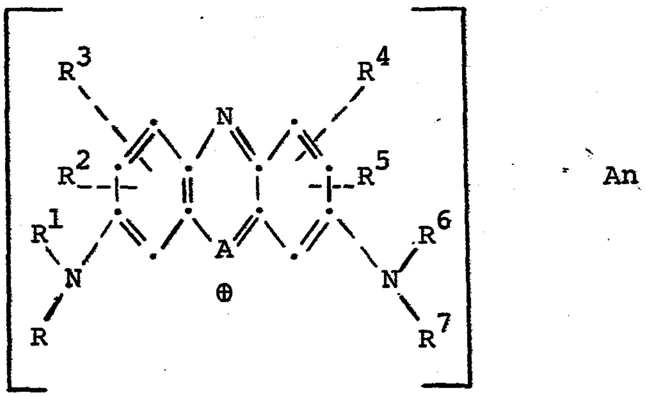

in which

A represents S or O;

An represents an anion;

R, $R^1$, $R^6$ and $R^7$ each independently represent hydrogen, non-tertiary $C_1$ to $C_4$ alkyl, benzyl or benzyl substituted in the benzene ring by one or two of non-tertiary $C_1$ to $C_4$ alkyl, non-tertiary $C_1$ to $C_4$ alkoxy, halogen or $SO_3M$ in which M represents an alkali metal cation, an ammonium cation or an alkaline earth metal cation;

$R^2$ and $R^5$ independently represent hydrogen, non-tertiary $C_1$ to $C_4$ alkyl, hydroxy, non-tertiary $C_1$ to $C_4$ alkoxy, halogen, amino or dialkylamino in which alkyl represents non-tertiary $C_1$ to $C_4$ alkyl; and

$R^3$ and $R^4$ independently represent hydrogen or the group $SO_3M$ in which M represents an alkali metal cation, an ammonium cation or an alkaline earth metal cation.

2. The method according to claim 1, wherein the sanitizing agent is one which produces hypochlorite ion or

oxygen.

3. The method according to claim 1 or 2, wherein aqueous solution of (A) and a solution of (B) are dispersed independently from separate dispensing means into the flush water.

4. The method according to claim 3, wherein the respective solutions containing A and B are substantially isolated from the flush water in the toilet tank during the quiescent period between flushes of the toilet.

5. The method according to claim 3 or 4, wherein the sanitizing agent is one which produces hypochlorite ion in aqueous solution.

6. The method according to claim 5, wherein the sanitizing agent which produces the hypochlorite in aqueous solution is selected from the group consisting of sodium hypochlorite, calcium hypochlorite and trichloroisocyanuric acid.

7. The method according to claim 5 or 6, wherein the amount of solution containing (A) is such as to produce a concentration of available chlorine of from approximately 0.5 ppm to approximately 20 ppm and the amount of solution containing (B) is such as to produce a concentration of dye of from approximately 0.05 ppm to approximately 10 ppm.

8. The method of claim 1, wherein (A) and (B) are dispensed together in the form of an aqueous solution from a single dispensing means into the flush water.

9. The method according to claim 8, wherein the sanitizing agent is one which produces oxygen in an aqueous solution.

10. The method according to claim 9, wherein the sanitizing agent is selected from the group consisting of sodium perborate, sodium persulfate, potassium perborate and potassium persulfate.

11. The method according to claim 10, wherein the sanitizing agent is sodium perborate.

12. The method according to any one of claims 9 to 11,

wherein the amount of dissolved sanitizing agent is such as to produce a concentration of available oxygen of from approximately 0.5 ppm to approximately 20 ppm and the amount of dissolved dyestuff is such as to produce a concentration of dye of from approximately 0.05 ppm to approximately 10 ppm.

13. The method according to any one of the preceding claims, wherein the dyestuff is selected from among the phenothiazines having the formula

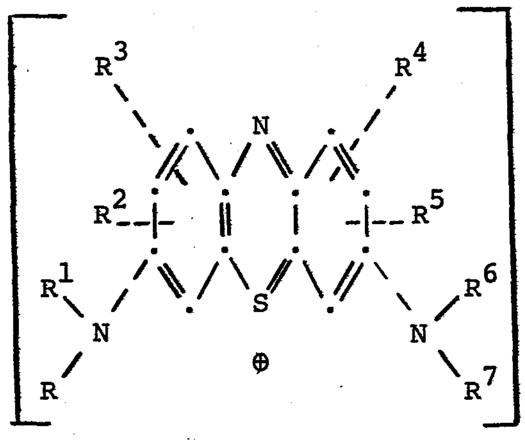

An

wherein R, $R^1$, $R^2$, $R^3$, $R^4$, $R^5$, $R^6$, $R^7$ and An have the same respective meanings given in claim 1.

14. The method according to claim 13, wherein the dyestuff is

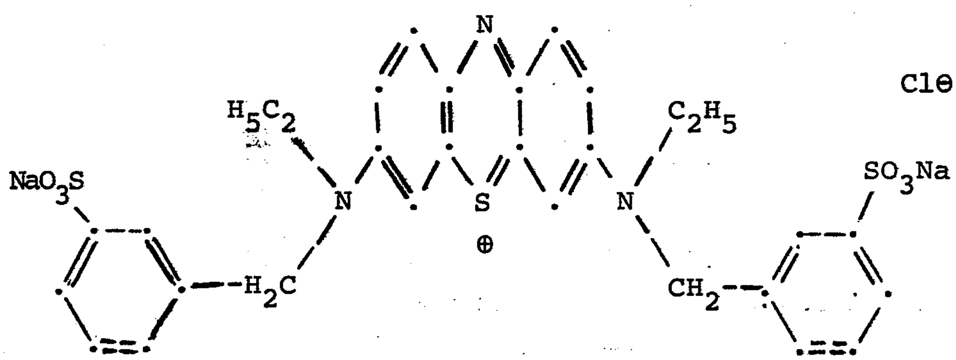

Cl⊖.

15. The method according to any one of claims 1 to 12, wherein the dyestuff is selected from among the phenothiazines having the formula

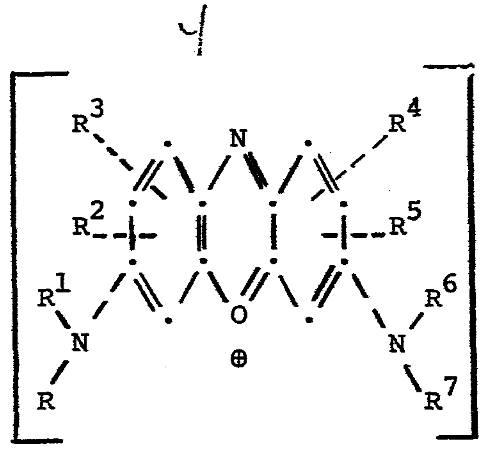 An

wherein R, $R^1$, $R^2$, $R^3$, $R^4$, $R^5$, $R^6$, $R^7$ and An have the same respective meanings given in claim 1.

16. The method according to claim 15, wherein the dyestuff is

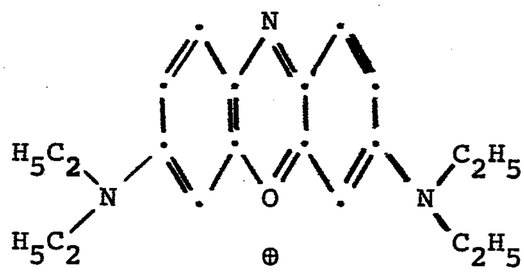 Cl⊖.